# EUROPEAN PATENT APPLICATION

(11) **EP 4 737 143 A1**
(43) Date of publication of application: **06.05.2026**
(21) Application number: 24830729.0
(22) Date of filing: 25.06.2024
(51) Int. Cl.: B60H 1/00

(54) **AIR CONDITIONING SYSTEM FOR MOTOR VEHICLE**

(30) Priority: 30.06.2023 CN 202321713235 U
(71) Applicant: Valeo Automotive Air Conditioning Hubei Co. Ltd., Jingzhou, Hubei 434000 (CN)
(72) Inventor: WAN, Xuanchen, Jingzhou, Hubei 434000 (CN); XUE, Gaoqiang, Jingzhou, Hubei 434000 (CN)
(74) Representative: Valeo Powertrain Systems
(86) International application number: PCT/CN2024/101154
(87) International publication number: WO 2025/002087

(57) **Abstract**

An air conditioning system (01) for a motor vehicle, comprising a refrigerant circuit (10). The refrigerant circuit (10) comprises a compressor (100), a first heat exchanger assembly (110), an evaporator-condenser (120), and a multi-way valve (130); the first heat exchanger assembly (110) comprises a first expansion device (1101) and an internal evaporator (1102); the internal evaporator (1102) is located downstream of the first expansion device (1101); the multi-way valve (130) comprises an inlet end (1301), a first outlet (1302), and a second outlet (1303); the inlet end (1301) is connected to a position downstream of the compressor (100); the evaporator-condenser (120) and the first expansion device (1101) are sequentially arranged downstream of the first outlet (1302); and an internal condenser (140) and the first expansion device (1101) are sequentially arranged downstream of the second outlet (1303). According to the air conditioning system (01), the working mode can be flexibly switched, and there is no need to additionally provide an auxiliary heating element in a heating mode, thereby achieving efficient system performance.

## Description

### Technical Field

Embodiments of the present utility model relate to an air conditioning system for a motor vehicle.

### Background Art

With the rapid development of the manufacturing industry, the provision of air conditioning equipment in a motor vehicle allows for flexible control of the temperature, humidity, etc. of the airflow inside the driver's cab. The air conditioning equipment comprises an air conditioning circuit. During the process of controlling the air conditioning circuit, designing a solution so that the airflow temperature and state inside the driver's cab can be independently controlled while reducing reliance on external auxiliary equipment and optimizing the design structure of the air conditioning circuit, has become a research topic requiring continuous breakthroughs.

### Summary of the Utility Model

Typically, when a refrigerant circuit is in a heating mode, it is difficult for an air conditioning system using auxiliary heating equipment to independently control the air temperature, and the control performance of an air conditioning circuit needs to be improved. Also, the system design of the air conditioning system is relatively complex, and its structural layout needs to be optimized.

An embodiment of the present utility model provides an air conditioning system for a motor vehicle.

An embodiment of the present utility model provides an air conditioning system for a motor vehicle, comprising: a refrigerant circuit, the refrigerant circuit comprising a compressor, a first heat exchanger assembly, an evaporator-condenser and a multi-way valve, wherein the first heat exchanger assembly comprises a first expansion device and an internal evaporator, and the internal evaporator is located downstream of the first expansion device; the multi-way valve comprises an inlet end, a first outlet, and a second outlet, and the inlet end is connected downstream of the compressor; the evaporator-condenser and the first expansion device are sequentially arranged downstream of the first outlet; and an internal condenser and the first expansion device are sequentially arranged downstream of the second outlet.

For example, according to the air conditioning system for the motor vehicle provided in at least one embodiment of the present utility model, the air conditioning system further comprises an airflow channel, and both the internal condenser and the internal evaporator are disposed in the airflow channel, wherein the internal condenser is located downstream of the internal evaporator along a flow direction of airflow.

For example, according to the air conditioning system for the motor vehicle provided in at least one embodiment of the present utility model, a second expansion device and the evaporator-condenser are sequentially arranged downstream of the internal evaporator, wherein the first expansion device, the internal evaporator, the second expansion device, the evaporator-condenser and the compressor are sequentially connected in series.

For example, according to the air conditioning system for the motor vehicle provided in at least one embodiment of the present utility model, the air conditioning system further comprises a second heat exchanger assembly and a coolant circuit; the second heat exchanger assembly comprises a third expansion device and a chiller, and the chiller is located downstream of the third expansion device; and the second heat exchanger assembly is connected in parallel with the first heat exchanger assembly in the refrigerant circuit, wherein the chiller is arranged between the refrigerant circuit and the coolant circuit to allow a fluid in the refrigerant circuit to exchange heat with a fluid in the coolant circuit.

For example, according to the air conditioning system for the motor vehicle provided in at least one embodiment of the present utility model, the air conditioning system further comprises a water condenser, and the water condenser is located between downstream of the compressor in the refrigerant circuit and the inlet end of the multi-way valve, and the water condenser is arranged between the refrigerant circuit and the coolant circuit to allow the fluid in the refrigerant circuit to exchange heat with the fluid in the coolant circuit.

For example, according to the air conditioning system for the motor vehicle provided in at least one embodiment of the present utility model, the coolant circuit comprises: a valve assembly; and an electric motor tube section, a radiator tube section, a chiller tube section, a battery tube section, and a water condenser tube section which are connected through the valve assembly.

For example, according to the air conditioning system for the motor vehicle provided in at least one embodiment of the present utility model, the valve assembly comprises a first operating mode, and in the first operating mode, the electric motor tube section and the radiator tube section are sequentially connected in series through the valve assembly to form a first coolant sub-circuit, the radiator tube section is connected in series with the battery tube section through the valve assembly to form a second coolant sub-circuit, and the water condenser tube section is connected in parallel with the electric motor tube section.

For example, according to the air conditioning system for the motor vehicle provided in at least one embodiment of the present utility model, the valve assembly comprises a second operating mode, and in the second operating mode, the chiller tube section is connected in series with the battery tube section through the valve assembly to form a second coolant sub-circuit, the electric motor tube section and the radiator tube section are connected in series through the valve assembly to form a third coolant sub-circuit, and the water condenser tube section is disconnected from both the second coolant sub-circuit and the third coolant sub-circuit.

For example, according to the air conditioning system for the motor vehicle provided in at least one embodiment of the present utility model, the valve assembly comprises a third operating mode, and in the third operating mode, the battery tube section, the chiller tube section, the electric motor tube section, and the radiator tube section are sequentially connected in series through the valve assembly to form a fourth coolant sub-circuit, and the water condenser tube section is disconnected from the fourth coolant sub-circuit.

For example, according to the air conditioning system for the motor vehicle provided in at least one embodiment of the present utility model, the valve assembly comprises a fourth operating mode, and in the fourth operating mode, the battery tube section, the chiller tube section, and the electric motor tube section are sequentially connected in series through the valve assembly to form a fifth coolant sub-circuit, and both the water condenser tube section and the radiator tube section are disconnected from the fifth coolant sub-circuit.

For example, according to the air conditioning system for the motor vehicle provided in at least one embodiment of the present utility model, the valve assembly comprises a fifth operating mode, and in the fifth operating mode, the battery tube section, the chiller tube section, and the water condenser tube section are sequentially connected in series through the valve assembly to form a sixth coolant sub-circuit, and both the electric motor tube section and the radiator tube section are disconnected from the sixth coolant sub-circuit.

The air conditioning system can achieve different communication forms between various components in the air conditioning system by switching the multi-way valve to the states corresponding to different outlets. Also, by controlling the opening state of the first expansion device, the air conditioning system can be flexibly switched between cooling, dehumidification, self-heating and other operating modes. The air conditioning system does not need to add additional auxiliary heating elements in the heating mode, has a compact system arrangement, and is easy to control, thereby having relatively efficient system performance.

### Brief Description of the Drawings

To more clearly illustrate the technical solutions of the embodiments of the present utility model, the drawings of the embodiments will be briefly introduced below. Obviously, the drawings described below only involve some embodiments of the present utility model, and are not intended to limit the present utility model.
Fig. 1 is a schematic diagram of the overall arrangement of a refrigerant circuit provided in an embodiment of the present utility model.
Fig. 2 is a schematic diagram of a refrigerant circuit in an air conditioning system provided in an embodiment of the present utility model when it is in a cooling mode.
Fig. 3 is a schematic diagram of a refrigerant circuit in an air conditioning system provided in an embodiment of the present utility model when it is in a cooling/defogging mode.
Fig. 4 is a schematic diagram of a refrigerant circuit in an air conditioning system provided in an embodiment of the present utility model when it is in a defogging/preheating/heating mode.
Fig. 5A is a schematic diagram of the overall arrangement of a coolant circuit provided in an embodiment of the present utility model.
Fig. 5B is a schematic diagram corresponding to a valve assembly in Fig. 5A.
Fig. 6 is a schematic diagram of a refrigerant circuit corresponding to the air conditioning system in Fig. 2 when it is in a cooling/defogging mode.
Fig. 7 is a schematic diagram of a refrigerant circuit corresponding to the air conditioning system in Fig. 3 when it is in a defogging mode.
Fig. 8 is a schematic diagram of another refrigerant circuit corresponding to the air conditioning system in Fig. 3 when it is in a defogging mode.
Fig. 9 is a schematic diagram of a refrigerant circuit corresponding to the air conditioning system in Fig. 4 when it is in a defogging/preheating mode.
Fig. 10 is a schematic diagram of a refrigerant circuit corresponding to the air conditioning system in Fig. 7 when it is in a heating mode.

### Detailed Description of the Embodiments

To make the objective, technical solutions and advantages of embodiments of the present utility model clearer, the technical solutions of the embodiments of the present utility model will be described clearly and completely below in conjunction with the drawings of the embodiments of the present utility model. Obviously, the described embodiments are some rather than all of the embodiments of the present utility model. All other embodiments obtained by those of ordinary skill in the art based on the described embodiments of the present utility model without inventive effort shall fall within the scope of protection of the present utility model.

Unless defined otherwise, the technical or scientific terms used in the present utility model shall have the common meanings as understood by those of ordinary skill in the field to which the present utility model belongs. Words such as "first" and "second" used in the present utility model do not denote any order, quantity or importance, and are merely used to distinguish different component parts. Words such as "comprise" or "include" mean that the element or object appearing before the word encompasses the elements or objects and their equivalents listed after the word, without excluding other elements or objects. Words such as "connecting" or "connected" are not restricted to a physical or mechanical connection, and may include an electrical connection, whether direct or indirect. The terms "upper," "lower," "left," "right" and the like are only used to indicate a relative positional relationship, and when the absolute position of a described object changes, the relative positional relationship may also change accordingly.

Typically, an air conditioning circuit comprises a refrigerant circuit and a coolant circuit. When the ambient temperature is relatively low, an air conditioner can be used to raise the air temperature inside a vehicle cabin. In a heating mode, the refrigerant circuit usually uses external equipment to assist in heating a refrigerant. For example, a Positive Temperature Coefficient (PCT) heater may be used to heat the refrigerant.

The inventors of the present application have discovered in their research that when a refrigerant circuit is in a heating mode, it is difficult for an air conditioning system using auxiliary heating equipment to independently control the air temperature, and the control performance of an air conditioning circuit needs to be improved; also, the system structure of the air conditioning system is relatively complex, and its structural layout needs to be optimized.

At least one embodiment of the present utility model provides an air conditioning system, comprising: a refrigerant circuit, the refrigerant circuit comprising a compressor, a first heat exchanger assembly, an evaporator-condenser and a multi-way valve, wherein the first heat exchanger assembly comprises a first expansion device and an internal evaporator, and the internal evaporator is located downstream of the first expansion device; the multi-way valve comprises an inlet end, a first outlet, and a second outlet, and the inlet end is connected downstream of the compressor; the evaporator-condenser and the first expansion device are sequentially arranged downstream of the first outlet; and an internal condenser and the first expansion device are sequentially arranged downstream of the second outlet.

The air conditioning system can achieve different communication forms between various components in the air conditioning system by switching the multi-way valve to the states corresponding to different outlets. Also, by controlling the opening state of the first expansion device, the air conditioning system can be flexibly switched between cooling, dehumidification, self-heating and other operating modes. The air conditioning system does not need to add additional auxiliary heating elements in the heating mode, has a compact structural arrangement, and is easy to control, thereby having efficient system performance.

The air conditioning system will now be described in conjunction with the drawings and some embodiments.

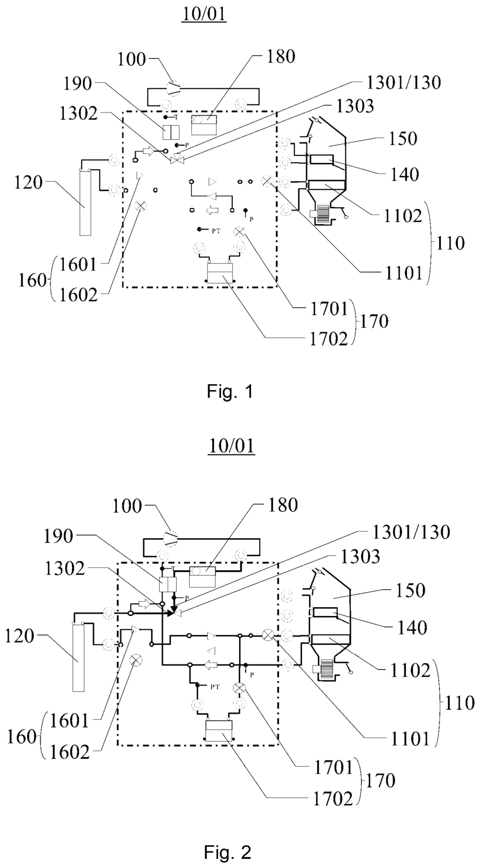

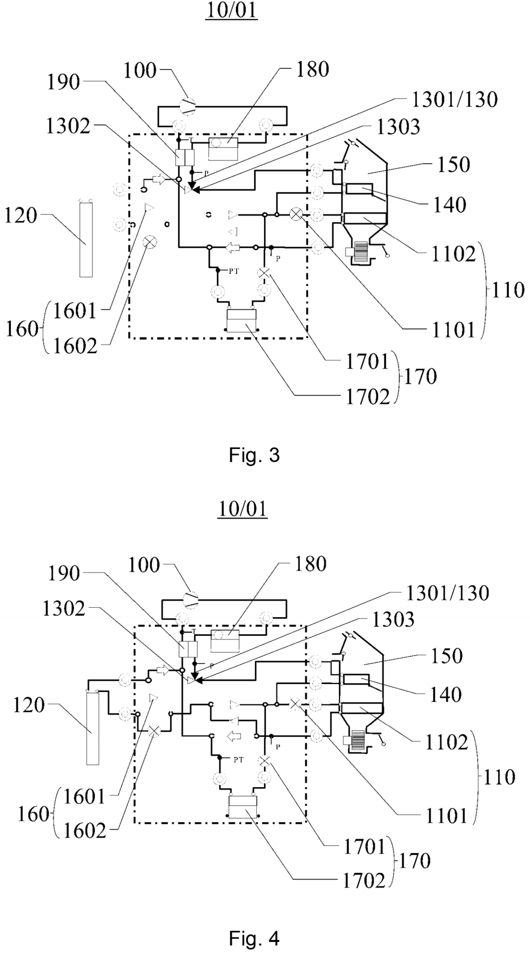

Fig. 1 is a schematic diagram of the overall arrangement of a refrigerant circuit provided in an embodiment of the present utility model. Fig. 2 is a schematic diagram of a refrigerant circuit in an air conditioning system provided in an embodiment of the present utility model when it is in a cooling mode; Fig. 3 is a schematic diagram of a refrigerant circuit in an air conditioning system provided in an embodiment of the present utility model when it is in a cooling/defogging mode; Fig. 4 is a schematic diagram of a refrigerant circuit in an air conditioning system provided in an embodiment of the present utility model when it is in a defogging/preheating/heating mode.

As shown in Fig. 1, an air conditioning system 01 for a motor vehicle comprises a refrigerant circuit 10, and the refrigerant circuit 10 comprises a compressor 100, a first heat exchanger assembly 110, an evaporator-condenser 120, and a multi-way valve 130. The first heat exchanger assembly 110 comprises a first expansion device 1101 and an internal evaporator 1102, and the internal evaporator 1102 is located downstream of the first expansion device 1101. For example, the first expansion device 1101 may control the pressure and temperature of fluid entering the internal evaporator 1102 by changing its opening degree. The multi-way valve 130 may be a three-way valve, including an inlet end 1301, a first outlet 1302, and a second outlet 1303, and the inlet end 1301 is connected downstream of the compressor 100.

As shown in Fig. 1, the multi-way valve 130 may include a first control mode and a second control mode. The state shown in Fig. 1 is a state where both the first control mode and the second control mode are turned off. For example, along a refrigerant circulation path, in the first control mode, the evaporator-condenser 120 and the first expansion device 1101 are sequentially arranged downstream of the first outlet 1302; in the second control mode, an internal condenser 140 and the first expansion device 1101 are sequentially arranged downstream of the second outlet 1303. For example, the first control mode may correspond to the refrigerant circuit of the air conditioning system shown in Fig. 2 when it is in the cooling mode, the second control mode may correspond to the refrigerant circuit of the air conditioning system shown in Fig. 3 when it is in the cooling/defogging mode, and the refrigerant circuit of the air conditioning system shown in Fig. 4 when it is in the defogging/preheating/heating mode (for detailed explanation, please refer to the embodiments to be described below).

As shown in Fig. 1, depending on the opening degree of the valve, the first expansion device 1101 may include any one of a fully open state, a closed state, and an intermediate throttling state. For example, the intermediate throttling state may include a state in which the valve in the first expansion device 1101 has a certain opening degree to provide a throttling function. The throttling state of the first expansion device 1101 varies depending on the opening degree of the valve.

For example, as shown in Fig. 1, the air conditioning system 01 includes an airflow channel 150, and both the internal condenser 140, and the internal evaporator 1102 are disposed within the airflow channel 150. Along a flow direction of airflow, the internal condenser 140 is located downstream of the internal evaporator 1102. For example, the internal evaporator 1102 is closer to the airflow inlet of the airflow channel 150 than the internal condenser 140. For example, when the first expansion device 1101 is in the fully open state, the refrigerant circulating in the first expansion device 1101 will not be throttled, so that the temperature and pressure of the refrigerant entering the internal evaporator 1102 are relatively high. At this time, the airflow passing through the internal evaporator 1102 will be heated, and the internal evaporator 1102 functions as a "heat pump." For example, when the refrigerant temperature in the internal condenser 140 is higher than the refrigerant temperature in the internal evaporator 1102, the internal evaporator 1102 may preheat the airflow in the airflow channel 150. The preheated airflow is then further heated after passing through the internal condenser 140, thereby allowing the air conditioning system to be in, for example, the heating mode, but it is not limited thereto. For example, when the first expansion device 1101 is in the closed state, the refrigerant will not circulate in the first expansion device 1101. For example, when the first expansion device 1101 is in the intermediate throttling state, the temperature and pressure of the refrigerant circulating in the first expansion device 1101 are reduced, and the refrigerant evaporates and absorbs heat when flowing through the internal evaporator 1102, thereby allowing the airflow in the airflow channel 150 to be cooled, and at this time, allowing the air conditioning system to be in, for example, the cooling mode, but it is not limited thereto.

Therefore, by switching the multi-way valve 130 to the first outlet 1302 or the second outlet 1303, the air conditioning system 01 can achieve different communication forms between various components in the air conditioning system 01, which may, for example, correspond to the first control mode and the second control mode described above. Also, by controlling the opening state of the first expansion device 1101, the operating modes of the air conditioning system 01, such as cooling, defogging, preheating, and heating, can be flexibly switched. The air conditioning system 01 does not need to add additional auxiliary heating elements in the heating mode, has a compact system arrangement, and is easy to control, thereby having relatively efficient system performance.

For example, as shown in Fig. 1, in the air conditioning system 01, a second expansion device 160 and an evaporator-condenser 120 are sequentially arranged downstream of the internal evaporator 1102. For example, the second expansion device 160 may comprise a first sub-expansion device 1601 and a second sub-expansion device 1602 which are connected in parallel with each other. For example, the first sub-expansion device 1601 and the second sub-expansion device 1602 can be selectively opened. For example, the first sub-expansion device 1601 may be a one-way valve, such as a CV-type one-way valve, but it is not limited thereto. The second sub-expansion device 1602 may be a throttling valve. For example, in different control modes of the air conditioning system 01, the second expansion device 160 may be located upstream of the evaporator-condenser 120, or the second expansion device 160 may be located downstream of the evaporator-condenser 120, which may be specifically set according to the control mode.

For example, as shown in Figs. 1 and 2, the air conditioning system 01 further comprises a second heat exchanger assembly 170 and a coolant circuit 20. The second heat exchanger assembly 170 comprises a third expansion device 1701 and a chiller 1702, and the chiller 1702 is located downstream of the third expansion device 1701. For example, the third expansion device 1701 may be a throttling valve, allowing the temperature and pressure of the refrigerant entering the chiller 1702 to have different states depending on the opening state of the third expansion device 1701. The second heat exchanger assembly 170 is connected in parallel with the first heat exchanger assembly 110 in the refrigerant circuit 10. The chiller 1702 is arranged between the refrigerant circuit 10 and the coolant circuit 20 to allow heat exchange between the refrigerant in the refrigerant circuit 10 and the coolant in the coolant circuit 20. For example, the second heat exchanger assembly 170 may have a dual-fluid channel, allowing the refrigerant in the refrigerant circuit 10 and the coolant in the coolant circuit 20 to respectively circulate in different channels for heat exchange.

For example, as shown in Fig. 1, a water condenser 180 is further provided between downstream of the compressor 100 in the refrigerant circuit 10 and the inlet end 1301 of the multi-way valve 130. The water condenser 180 is also arranged between the refrigerant circuit 10 and the coolant circuit 20 to allow heat exchange between the refrigerant in the refrigerant circuit 10 and the coolant in the coolant circuit 20. Similarly, the water condenser 180 may also have a dual-fluid channel, allowing the refrigerant in the refrigerant circuit 10 and the coolant in the coolant circuit 20 to respectively circulate in different channels for heat exchange.

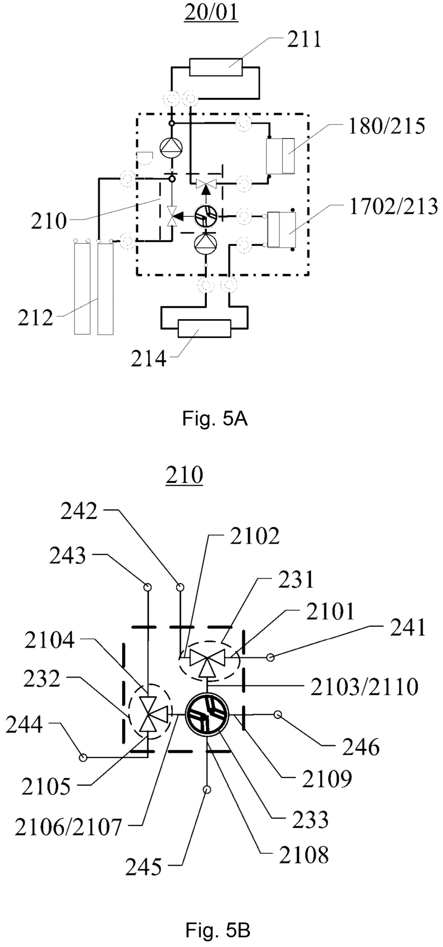

Fig. 5A is a schematic diagram of the overall arrangement of a coolant circuit provided in an embodiment of the present utility model; Fig. 5B is a schematic diagram corresponding to a valve assembly in Fig. 5A.

For example, corresponding to the refrigerant circuit 10 shown in Fig. 1, the coolant circuit 20 in Fig. 5A comprises a valve assembly 210, and an electric motor tube section 211, a radiator tube section 212, a chiller tube section 213, a battery tube section 214, and a water condenser tube section 215 which are connected through the valve assembly 210.

For example, as shown in Figs. 5A and 5B, the valve assembly 210 comprises a first coolant valve 231, a second coolant valve 232, and a four-way valve 233. The first coolant valve 231 comprises a first port 2101, a second port 2102, and a third port 2103; the second coolant valve 232 comprises a fourth port 2104, a fifth port 2105, and a sixth port 2106; and the four-way valve 233 comprises a seventh port 2107, an eighth port 2108, a ninth port 2109, and a tenth port 2110. The first port 2101 is in communication with the first outlet 241 of the valve assembly 210; the second port 2102 is in communication with the second outlet 242 of the valve assembly 210; the third port 2103 is in communication with the tenth port 2110 of the four-way valve 233; the fourth port 2104 is in communication with the third outlet 243 of the valve assembly 210; the fifth port 2105 is in communication with the fourth outlet 244 of the valve assembly 210; the sixth port 2106 is in communication with the seventh port 2107 of the four-way valve 233; the eighth port 2108 is in communication with the fifth outlet 245 of the valve assembly 210; and the ninth port 2109 is in communication with the sixth outlet 246 of the valve assembly 210.

For example, Figs. 5A and 5B show a state when the third port 2103 of the first coolant valve 231 is not in communication with each of the first port 2101 and the second port 2102, and each of the fourth port 2104 and the fifth port 2105 of the second coolant valve 232 is not in communication with the sixth port 2106. In different operating modes, the third port 2103 of the first coolant valve 231 may selectively be in communication with the first port 2101 or the second port 2102; the sixth port 2106 of the second coolant valve 232 may selectively be in communication with the fourth port 2104 or the fifth port 2105; the four-way valve 233 may be switchably connected to the first coolant valve 231, the second coolant valve 232, and the fifth outlet 245 and the sixth outlet 246 of the valve assembly 210 through its internal reversing channel; for details, please refer to the relevant descriptions in the embodiments to be described below.

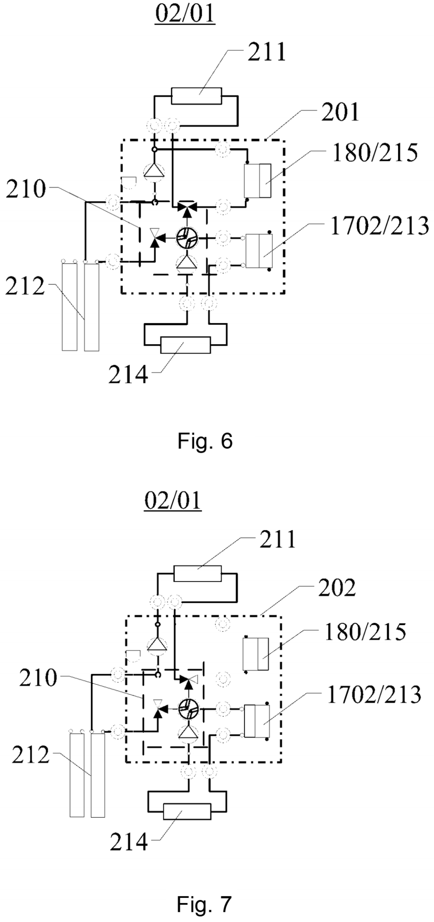

Fig. 6 is a schematic diagram of a refrigerant circuit corresponding to the air conditioning system in Fig. 2 when it is in a cooling/defogging mode.

For example, as shown in Figs. 2 and 6, in the control mode of the air conditioning system 01 in the first embodiment, for the refrigerant circuit 10, the compressor 100, the water condenser 180, the multi-way valve 130, the evaporator-condenser 120, the second expansion device 160, the first expansion device 1101, and the internal evaporator 1102 are sequentially connected in series, and the second heat exchanger assembly 170 is connected in parallel across the two ends of the first heat exchanger assembly 110. That is, the inlet end 1301 of the multi-way valve 130 is in communication with the first outlet 1302, and the inlet end 1301 of the multi-way valve 130 is disconnected from the second outlet 1303, thereby disconnecting the internal condenser 140 from the refrigerant circuit 10. The first sub-expansion device 1601 of the second expansion device 160 is located in the refrigerant circuit and located downstream of the evaporator-condenser 120, and the second sub-expansion device 1602 is disconnected from the refrigerant circuit.

For example, with respect to the control mode in Fig. 2, as shown in Figs. 5B and 6, for the coolant circuit 20, the valve assembly 210 comprises a first operating mode 201. In the first operating mode 201, the first port 2101 of the first coolant valve 231 is in communication with the third port 2103, and the second port 2102 is in communication with the third port 2103; the fourth port 2104 of the second coolant valve 232 is not in communication with the sixth port 2106, and the fifth port 2105 is in communication with the sixth port 2106; the seventh port 2107 of the four-way valve 233 is in communication with the tenth port 2110, and the eighth port 2108 is in communication with the ninth port 2109. Thus, the electric motor tube section 211 and the radiator tube section 212 are sequentially connected in series through the valve assembly 210 to form a first coolant sub-circuit, the radiator tube section 213 is connected in series with the battery tube section 214 through the valve assembly 210 to form a second coolant sub-circuit, and the water condenser tube section 215 is connected in parallel with the electric motor tube section 211.

For example, the air conditioning system 01 as shown in Figs. 2 and 6 may correspond to the air conditioning cooling and battery fast charging modes. The ambient temperature is very high, for example, it may be higher than 28°C to 30°C, and the battery generates significant heat when it is in the fast charging mode. The operating process of the air conditioning system 01 includes:
For example, as shown in Fig. 2, after the compressor 100 is powered on, the refrigerant becomes a high-temperature, high-pressure gas after passing through the compressor 100. It then enters the water condenser 180 for cooling, becoming a liquid refrigerant. For example, the refrigerant circuit 10 is further provided with an internal heat exchanger 190, and the internal heat exchanger 190 has dual circulation channels, so that the refrigerant after passing through the water condenser 180 and the refrigerant returning to the compressor 100 can exchange heat in the internal heat exchanger 190. Then, the refrigerant enters the evaporator-condenser 120 where the temperature of the refrigerant is further reduced. A portion of the refrigerant enters the first heat exchanger assembly 110, and another portion of the refrigerant enters the second assembly 170. Due to the high throttling degree of the first expansion device 1101, the temperature of the refrigerant entering the internal evaporator 1102 is reduced. When airflow, such as air, is drawn into the airflow channel 150 by a fan, it can be cooled by the internal evaporator 1102 and finally discharged from the outlet of the airflow channel 150.

For example, as shown in Figs. 2 and 6, the refrigerant entering the second assembly 170 has a very low temperature, so it can exchange heat with the coolant in the battery tube section 214 to reduce the coolant temperature, thereby reducing the battery temperature. Also, since the refrigerant in the water condenser 180 has a relatively high temperature, its heat can be dissipated to the external environment through the radiator tube section 212, and the heat from the electric motor can also be dissipated to the external environment through the radiator tube section 212.

For example, as shown in Figs. 3 and 6, in a control mode of an air conditioning system 01 in a second embodiment, for the refrigerant circuit 10, the compressor 100, the water condenser 180, the multi-way valve 130, the internal condenser 140, the first expansion device 1101, and the internal evaporator 1102 are sequentially connected in series, and the second heat exchanger assembly 170 is connected in parallel across the two ends of the first heat exchanger assembly 110. That is, the inlet end 1301 of the multi-way valve 130 is in communication with the second outlet 1303, and the inlet end 1301 of the multi-way valve 130 is disconnected from the first outlet 1302, thereby disconnecting both the evaporator-condenser 120 and the second expansion device 160 from the refrigerant circuit 10. In the coolant circuit 20, the connections of the various components of the valve assembly 210 are consistent with those in the first embodiment.

For example, the air conditioning system 01 as shown in Figs. 3 and 6 may correspond to the air conditioning cooling, defogging and battery cooling modes. When the ambient temperature is relatively high, for example, the ambient temperature is lower than 28°C to 30°C, and the battery is in the fast charging mode and generates significant heat, the operating process of the air conditioning system 01 includes:
For example, as shown in Fig. 3, after the compressor 100 is powered on, the refrigerant becomes a high-temperature, high-pressure gas after passing through the compressor 100, and then enters the water condenser 180 for cooling, becoming a liquid refrigerant. The refrigerant after passing through the water condenser 180 and the refrigerant returning to the compressor 100 exchange heat in the internal heat exchanger 190. Then, the refrigerant enters the internal condenser 140 to heat the airflow in the airflow channel 150. A portion of the refrigerant flowing out of the internal condenser 140 enters the first heat exchanger assembly 110, and another portion of the refrigerant enters the second assembly 170. The first expansion device 1101 is in the throttling state, which reduces the temperature of the refrigerant entering the internal evaporator 1102. When the airflow, such as air, is drawn into the airflow channel 150 by the fan, the internal evaporator 1102 can defog the airflow and reduce the airflow temperature. After the internal condenser 140 heats this portion of the airflow, the temperature of the airflow discharged from the airflow channel 150 is not too low, so as to ensure the user experience.

For example, as shown in Figs. 3 and 6, when the refrigerant enters the second assembly 170, the third expansion device 1701 is in the throttling state, thereby enabling the refrigerant temperature to be reduced. The refrigerant then enters the chiller 1702 to exchange heat with the coolant in the battery tube section 214, so as to reduce the coolant temperature, thereby reducing the battery temperature. Also, since the refrigerant temperature in the water condenser 180 is relatively high, its heat can be dissipated to the external environment through the radiator tube section 212, and the heat from the electric motor can also be dissipated to the external environment through the radiator tube section 212.

Fig. 7 is a schematic diagram of a refrigerant circuit corresponding to the air conditioning system in Fig. 3 when it is in a defogging mode.

For example, as shown in Figs. 3 and 7, in a control mode of an air conditioning system 01 in a third embodiment, the connections of the various components in the refrigerant circuit 10 are consistent with those in the second embodiment. In the coolant circuit 20, the valve assembly 210 is in a second operating mode 202. In the second operating mode 202, the chiller tube section 213 is connected in series with the battery tube section 214 through the valve assembly 210 to form a second coolant sub-circuit. The electric motor tube section 211 and the radiator tube section 212 are connected in series through the valve assembly 210 to form a third coolant sub-circuit. The water condenser tube section 215 is disconnected from both the second coolant sub-circuit and the third coolant sub-circuit. The difference from the second embodiment is that the water condenser 180 is not connected to the third coolant sub-circuit.

For example, the air conditioning system 01 as shown in Figs. 3 and 7 may correspond to the air conditioning defogging mode and the battery cooling mode. When the ambient temperature is relatively low, for example, it may be lower than 18°C to 20°C, and the battery generates significant heat when it is in the fast charging mode, the operating process of the air conditioning system 01 includes:
For example, as shown in Fig. 3, the refrigerant becomes a high-temperature, high-pressure gas after passing through the compressor 100, and then enters the water condenser 180 for cooling, becoming a liquid refrigerant. Then, the refrigerant enters the internal condenser 140 to heat the airflow in the airflow channel 150. A portion of the refrigerant exiting the internal condenser 140 enters the first heat exchanger assembly 110, and another portion of the refrigerant enters the second assembly 170. The first expansion device 1101 is in the throttling state, and the temperature of the refrigerant entering the internal evaporator 1102 is reduced. When airflow, such as air, is drawn into the airflow channel 150 by the fan, the internal evaporator 1102 can defog the airflow, further reducing the airflow temperature. Since the refrigerant does not undergo heat exchange in the water condenser 180, the internal condenser 140 has a relatively high temperature, which can heat the airflow flowing through the internal evaporator 1102, greatly increasing its temperature to ensure the user experience.

For example, as shown in Figs. 3 and 7, when the refrigerant enters the second assembly 170, the third expansion device 1701 is in the throttling state, thereby reducing the refrigerant temperature. The refrigerant then enters the chiller 1702 to exchange heat with the coolant in the battery tube section 214, reducing the battery temperature. Also, the heat from the electric motor can be dissipated to the external environment through the radiator tube section 212.

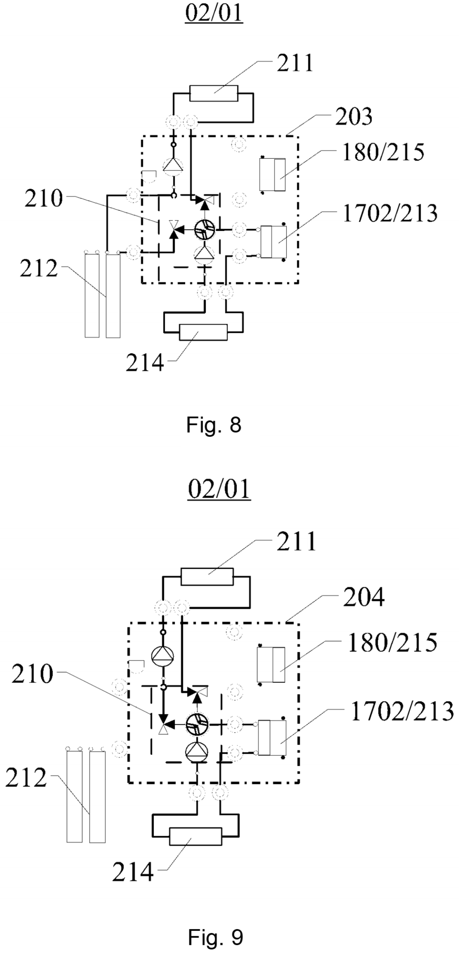

Fig. 8 is a schematic diagram of another refrigerant circuit corresponding to the air conditioning system in Fig. 3 when it is in a defogging mode.

For example, as shown in Figs. 3 and 8, in a control mode of an air conditioning system 01 in a fourth embodiment, the connections of the various components in the refrigerant circuit 10 are consistent with those in the second embodiment. In the coolant circuit 20, the valve assembly 210 is in a third operating mode 203. In the third operating mode 203, the battery tube section 214, the chiller tube section 213, the electric motor tube section 211, and the radiator tube section 212 are sequentially connected in series through the valve assembly 210 to form a fourth coolant sub-circuit, and the water condenser tube section 215 is disconnected from the fourth coolant sub-circuit.

For example, the air conditioning system 01 as shown in Figs. 3 and 8 may correspond to the air conditioning defogging and battery cooling modes, wherein the ambient temperature is relatively low, for example, it may be lower than 13°C to 15°C. The operating process of the air conditioning system 01 includes:
For example, as shown in Fig. 3, the refrigerant becomes a high-temperature, high-pressure gas after passing through the compressor 100 and enters the water condenser 180. Then, the refrigerant enters the internal condenser 140 to heat the airflow in the airflow channel 150. A portion of the refrigerant discharged from the internal condenser 140 enters the first heat exchanger assembly 110, and another portion of the refrigerant enters the second assembly 170. The first expansion device 1101 is in the throttling state, and the temperature of the refrigerant entering the internal evaporator 1102 is reduced. When airflow, such as air, is drawn into the airflow channel 150 by the fan, the internal evaporator 1102 can defog the airflow, further reducing the airflow temperature. Since the refrigerant does not undergo heat exchange in the water condenser 180, the internal condenser 140 has a relatively high temperature, which can heat the airflow flowing through the internal evaporator 1102, greatly increasing its temperature to ensure the user experience.

For example, as shown in Figs. 3 and 8, when the refrigerant enters the second assembly 170, the third expansion device 1701 is in the throttling state, thereby reducing the refrigerant temperature. The refrigerant then enters the chiller 1702 to exchange heat with the coolant in the battery tube section 214, reducing the battery temperature. Since the electric motor tube section 211 is connected in series with the second assembly 170, the motor temperature can also be reduced by the refrigerant in the chiller 1702.

Fig. 9 is a schematic diagram of a refrigerant circuit corresponding to the air conditioning system in Fig. 4 when it is in a defogging/preheating mode.

For example, as shown in Figs. 4 and 9, in a control mode of an air conditioning system 01 in a fifth embodiment, the internal condenser 140, the internal heat exchanger 190, and the water condenser 180 are arranged upstream of the first expansion device 1101, and the first expansion device 1101, the internal evaporator 1102, the second expansion device 160, the evaporator-condenser 120, and the compressor 100 are sequentially connected in series. The inlet end 1301 of the multi-way valve 130 is in communication with the second outlet 1303, and the inlet end 1301 of the multi-way valve 130 is disconnected from the first outlet 1302. The second sub-expansion device 1602 in the second expansion device 160 is located in the refrigerant circuit and located downstream of the internal evaporator 1102, and the first sub-expansion device 1601 is disconnected from the refrigerant circuit.

For example, corresponding to the control mode in Fig. 4, as shown in Figs. 5B and 9, in the coolant circuit 20, the valve assembly 210 includes a fourth operating mode 204. In the fourth operating mode 204, the second port 2102 of the first coolant valve 231 is in communication with the third port 2103, and the first port 2101 is not in communication with the third port 2103; the fourth port 2104 of the second coolant valve 232 is in communication with the sixth port 2106, and the fifth port 2105 is not in communication with the sixth port 2106; the seventh port 2107 of the four-way valve 233 is in communication with the eighth port 2108, and the ninth port 2109 is in communication with the tenth port 2110. Thus, the battery tube section 214, the chiller tube section 213, and the electric motor tube section 211 are sequentially connected in series through the valve assembly 210 to form a fifth coolant sub-circuit, and both the water condenser tube section 215 and the radiator tube section 212 are disconnected from the fifth coolant sub-circuit.

For example, the air conditioning system 01 as shown in Figs. 4 and 9 may correspond to the air conditioning defogging mode, wherein the ambient temperature is relatively low, for example, it may be lower than 13°C to 15°C; the battery temperature is higher than the ambient temperature, for example, it may be lower than 15°C to 25°C. The operating process of the air conditioning system 01 includes:
The refrigerant becomes a high-temperature, high-pressure gas after passing through the compressor 100 and then enters the water condenser 180. Next, the refrigerant enters the internal condenser 140 to heat the airflow in the airflow channel 150. The refrigerant flowing out of the internal condenser 140 enters the first heat exchanger assembly 110. The first expansion device 1101 is in a slightly throttling state, causing a slight decrease in the temperature of the refrigerant entering the internal evaporator 1102 to defog the airflow. Then, the refrigerant flows out of the internal evaporator 1102 and passes through the second sub-expansion device 1602 into the evaporator-condenser 120. The second sub-expansion device 1602 is in the throttling state, reducing the refrigerant pressure and allowing the refrigerant to absorb heat from the external environment in the evaporator-condenser 120. The refrigerant then passes through an internal heat exchanger 190 to return to the compressor 100. The third expansion device 1701 is in the closed state, disconnecting the second assembly 170 from the refrigerant circuit. In the operating mode, the refrigerant entering the internal condenser 140 has a relatively high temperature to facilitate heating of the airflow, thereby ensuring the user experience. As shown in Fig. 9, the refrigerant does not undergo heat exchange in the second assembly 170. The electric motor tube section 211 and the battery tube section 214 are connected in series. The temperature of the electric motor is higher than the ambient temperature. Therefore, the temperature of the battery can be increased by the heat generated when the electric motor is running. For example, the heat generated when the electric motor is stalled can be transferred to the electric motor, but this is not limited thereto.

For example, as shown in Figs. 4 and 9, in a control mode of an air conditioning system 01 in a sixth embodiment, the arrangements of the various components in the refrigerant circuit 10 and refrigerant circuit 20 are the same as those in the fifth embodiment.

For example, the air conditioning system 01 as shown in Figs. 4 and 9 may also correspond to the air conditioning preheating mode, wherein the ambient temperature is relatively low, for example, it may be lower than 25°C to 30°C. The operating process of the air conditioning system 01 includes:
After passing through the compressor 100, the refrigerant becomes a high-temperature, high-pressure gas and enters the water condenser 180. Then, the refrigerant enters the internal condenser 140 to heat the airflow in the airflow channel 150. Subsequently, the refrigerant flowing out of the internal condenser 140 enters the first heat exchanger assembly 110. The first expansion device 1101 is in the fully open state, thereby not reducing the refrigerant temperature, so that the refrigerant entering the internal evaporator 1102 is at a high temperature, and is used to preheat the airflow entering the airflow channel 150. For example, the internal evaporator 1102 functions as a "heat pump". Since the internal condenser 140 is located upstream of the internal evaporator 1102 and located at a position near the outlet of the airflow channel 150, the internal condenser 140 can be used to heat the airflow preheated by the internal evaporator 1102. The refrigerant flows out of the internal evaporator 1102 and enters the evaporator-condenser 120 through the second sub-expansion device 1602. The second sub-expansion device 1602 is in the throttling state, reducing the pressure of the refrigerant. The refrigerant absorbs heat from the external environment in the evaporator-condenser 120 and then passes through the internal heat exchanger 190 to return to the compressor 100. The third expansion device 1701 is in the closed state, disconnecting the second assembly 170 from the refrigerant circuit. As shown in Fig. 9, the refrigerant does not undergo heat exchange in the second assembly 170. The electric motor tube section 211 and the battery tube section 214 are connected in series, thereby allowing the battery temperature to be increased by the heat generated when the electric motor is running. For example, the heat generated when the electric motor is stalled can be transferred to the electric motor, but it is not limited thereto. For example, when both the electric motor and the battery have the temperature of 25°C to 30°C, both the electric motor and the battery can operate normally. In this case, the electric motor may transfer less heat to the battery.

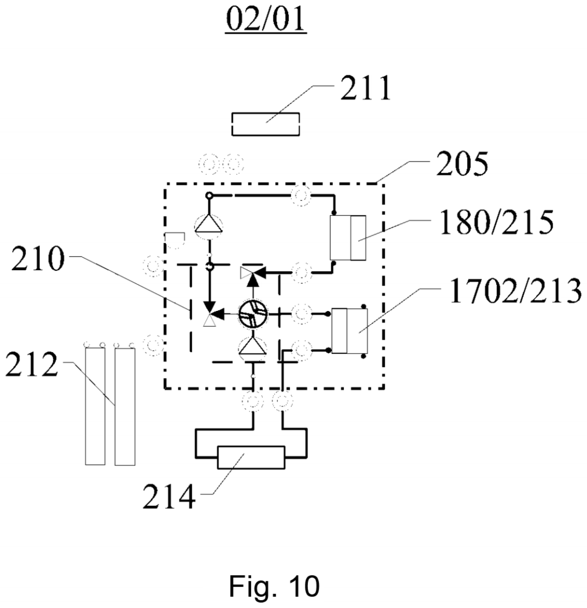

Fig. 10 is a schematic diagram of a refrigerant circuit corresponding to the air conditioning system in Fig. 4 when it is in a heating mode.

For example, as shown in Figs. 4 and 10, in a control mode of an air conditioning system 01 in a seventh embodiment, the arrangements of the various components in the refrigerant circuit 10 are the same as those in the fifth embodiment. The valve assembly 210 includes a fifth operating mode 205. In the fifth operating mode 205, the second port 2102 of the first coolant valve 231 is in communication with the third port 2103, and the first port 2101 is not in communication with the third port 2103; the fourth port 2104 of the second coolant valve 232 is in communication with the sixth port 2106, and the fifth port 2105 is not in communication with the sixth port 2106; the seventh port 2107 of the four-way valve 233 is in communication with the eighth port 2108, and the ninth port 2109 is in communication with the tenth port 2110. Therefore, the battery tube section 214, the chiller tube section 213, and the water condenser tube section 215 are sequentially connected in series through the valve assembly 210 to form a sixth coolant sub-circuit, and both the electric motor tube section 211 and the radiator tube section 212 are disconnected from the sixth coolant sub-circuit.

For example, as shown in Figs. 4 and 10, the air conditioning system 01 may also correspond to the air conditioning heating mode, wherein the ambient temperature is relatively low, for example, it may be lower than -15°C to -18°C. The operating process of the air conditioning system 01 includes:
After being pressurized by the compressor 100, the refrigerant becomes a high-temperature, high-pressure gas and enters the water condenser 180, and the refrigerant temperature is reduced in the water condenser 180. Then, the refrigerant enters the internal condenser 140 to heat the airflow in the airflow channel 150. A portion of the refrigerant flowing out of the internal condenser 140 enters the first heat exchanger assembly 110. The first expansion device 1101 is in the fully open state, thereby not reducing the refrigerant temperature, so that the refrigerant entering the internal evaporator 1102 is at a high temperature, and is used to preheat the airflow entering the airflow channel 150. For example, the internal evaporator 1102 functions as a "heat pump". Since the internal condenser 140 is located upstream of the internal evaporator 1102 and located at a position near the outlet of the airflow channel 150, the internal condenser 140 can be used to heat the airflow preheated by the internal evaporator 1102. The refrigerant flows out of the internal evaporator 1102 and enters the evaporator-condenser 120 through the second sub-expansion device 1602. The second sub-expansion device 1602 is in a slightly throttling state, and the pressure of the refrigerant is slightly reduced. Furthermore, due to the relatively low ambient temperature, the evaporator-condenser 120 absorbs almost no heat from the external environment. Finally, the refrigerant passes through the internal heat exchanger 190 to return to the compressor 100. Another portion of the refrigerant flowing out of the internal condenser 140 enters the third expansion device 1701, and the third expansion device 1701 is in a slightly throttling state to slightly reduce the temperature of the refrigerant. As shown in Fig. 10, the refrigerant and the coolant exchange heat in the second assembly 170, and the refrigerant and the coolant exchange heat in the water condenser 180, thereby causing the refrigerant to transfer heat to the sixth coolant sub-circuit and allowing the battery to be heated, so as to be in a normal operating state.

For example, as shown in Figs. 4 and 10, when the air conditioning system 01 is in the heating mode, the refrigerant hardly absorbs heat from the external environment. Instead, through the work done by the compressor 100, electrical energy is converted into heat energy, allowing the refrigerant entering the internal condenser 140 to heat the airflow in the airflow channel. In addition, the refrigerant can also transfer heat to the coolant circuit to heat the battery. For example, through the work done by the compressor 100, the heating of the airflow by the internal condenser 140, and the cooling of the refrigerant by the evaporator-condenser 120, a "triangular circulation" self-heating mode is formed in the air conditioning system 01. In this heating mode, there is no need to use additional auxiliary heating elements to heat the airflow; instead, the conversion of electrical energy into heat energy is directly utilized to transfer heat to components such as the internal condenser 140, thereby achieving a "self-heating" effect. In addition, the various components in the air conditioning system 01 are compactly arranged and easy to control, having relatively efficient system performance.

It should be noted that the control modes of the air conditioning system described above are several preferred solutions provided by the present utility model, and the embodiments of the present utility model are not limited thereto. To adapt to changes in the external environment, different communication forms between various components in the air conditioning system may also be realized, and by controlling the opening state of the first expansion device, the cooling, defogging, self-heating and other operating modes of the air conditioning system can be flexibly switched and controlled.

For example, the air conditioning system provided in the embodiments of the present utility model may be used in a Battery Electric Vehicle (BEV), a Hybrid Electric Vehicle (HEV), a Plug-in Hybrid Electric Vehicle (PHEV), a Range-extended electric vehicle (Range-extended EV), a Fuel Cell Electric Vehicle (FCEV), etc. For example, after the airflow is discharged through the airflow channel, it enters the vehicle's cab, thereby adjusting the temperature and humidity inside the cab to optimize the user experience.

Described above are merely specific embodiments of the present utility model, but the protection scope of the present utility model is not limited thereto. Any variations or replacements that can be easily conceived by those skilled in the art within the technical scope disclosed in the present utility model should be encompassed within the protection scope of the present utility model. Therefore, the protection scope of the present utility model should be defined by the protection scope of the claims.

## Claims

1. An air conditioning system (01) for a motor vehicle, **characterized in that** the air conditioning system comprises: a refrigerant circuit (10), the refrigerant circuit (10) comprising:
a compressor (100);
a first heat exchanger assembly (110) comprising a first expansion device (1101) and an internal evaporator (1102), wherein the internal evaporator (1102) is located downstream of the first expansion device (1101);
an evaporator-condenser (120); and
a multi-way valve (130) comprising an inlet end (1301), a first outlet (1302), and a second outlet (1303), wherein the inlet end (1301) is connected downstream of the compressor (100);
wherein the evaporator-condenser (120) and the first expansion device (1101) are sequentially arranged downstream of the first outlet (1302); and
an internal condenser (140) and the first expansion device (1101) are sequentially arranged downstream of the second outlet (1303).

2. The air conditioning system (01) for the motor vehicle as claimed in claim 1, **characterized in that** the air conditioning system further comprises an airflow channel (150), and both the internal condenser (140) and the internal evaporator (1102) are disposed in the airflow channel (150),
wherein the internal condenser (140) is located downstream of the internal evaporator (1102) along a flow direction of airflow.

3. The air conditioning system (01) for the motor vehicle as claimed in claim 1, **characterized in that** a second expansion device (160) and the evaporator-condenser (120) are sequentially arranged downstream of the internal evaporator (1102), wherein the first expansion device (1101), the internal evaporator (1102), the second expansion device (160), the evaporator-condenser (120) and the compressor (100) are sequentially connected in series.

4. The air conditioning system (01) for the motor vehicle as claimed in claim 1, **characterized in that** the air conditioning system (01) further comprises a second heat exchanger assembly (170) and a coolant circuit (20);
the second heat exchanger assembly (170) comprises a third expansion device (1701) and a chiller (1702), and the chiller (1702) is located downstream of the third expansion device (1701); and
the second heat exchanger assembly (170) is connected in parallel with the first heat exchanger assembly (110) in the refrigerant circuit (10), wherein the chiller (1702) is arranged between the refrigerant circuit (10) and the coolant circuit (20) to allow a fluid in the refrigerant circuit (10) to exchange heat with a fluid in the coolant circuit (20).

5. The air conditioning system (01) for the motor vehicle as claimed in claim 4, **characterized in that** the air conditioning system (01) further comprises a water condenser (180), and the water condenser (180) is located between downstream of the compressor (100) in the refrigerant circuit (10) and the inlet end (1301) of the multi-way valve (130), and
the water condenser (180) is arranged between the refrigerant circuit (10) and the coolant circuit (20) to allow the fluid in the refrigerant circuit (10) to exchange heat with the fluid in the coolant circuit (20).

6. The air conditioning system (01) for the motor vehicle as claimed in claim 5, **characterized in that** the coolant circuit (20) comprises:
a valve assembly (210); and
an electric motor tube section (211), a radiator tube section (212), a chiller tube section (213), a battery tube section (214), and a water condenser tube section (215) which are connected through the valve assembly (210).

7. The air conditioning system (01) for the motor vehicle as claimed in claim 6, **characterized in that** the valve assembly (210) comprises a first operating mode (201), and in the first operating mode (201),
the electric motor tube section (211) and the radiator tube section (212) are sequentially connected in series through the valve assembly (210) to form a first coolant sub-circuit, the radiator tube section (213) is connected in series with the battery tube section (214) through the valve assembly (210) to form a second coolant sub-circuit, and the water condenser tube section (215) is connected in parallel with the electric motor tube section (211).

8. The air conditioning system (01) for the motor vehicle as claimed in claim 6, **characterized in that** the valve assembly (210) comprises a second operating mode (202), and in the second operating mode (202),
the chiller tube section (213) is connected in series with the battery tube section (214) through the valve assembly (210) to form a second coolant sub-circuit, the electric motor tube section (211) and the radiator tube section (212) are connected in series through the valve assembly (210) to form a third coolant sub-circuit, and the water condenser tube section (215) is disconnected from both the second coolant sub-circuit and the third coolant sub-circuit.

9. The air conditioning system (01) for the motor vehicle as claimed in claim 6, **characterized in that** the valve assembly (210) comprises a third operating mode (203), and in the third operating mode (203),
the battery tube section (214), the chiller tube section (213), the electric motor tube section (211), and the radiator tube section (212) are sequentially connected in series through the valve assembly (210) to form a fourth coolant sub-circuit, and the water condenser tube section (215) is disconnected from the fourth coolant sub-circuit.

10. The air conditioning system (01) for the motor vehicle as claimed in claim 6, **characterized in that** the valve assembly (210) comprises a fourth operating mode (204), and in the fourth operating mode (204),
the battery tube section (214), the chiller tube section (213), and the electric motor tube section (211) are sequentially connected in series through the valve assembly (210) to form a fifth coolant sub-circuit, and both the water condenser tube section (215) and the radiator tube section (212) are disconnected from the fifth coolant sub-circuit.

11. The air conditioning system (01) for the motor vehicle as claimed in claim 6, **characterized in that** the valve assembly (210) comprises a fifth operating mode (205), and in the fifth operating mode (205),
the battery tube section (214), the chiller tube section (213), and the water condenser tube section (215) are sequentially connected in series through the valve assembly (210) to form a sixth coolant sub-circuit, and both the electric motor tube section (211) and the radiator tube section (212) are disconnected from the sixth coolant sub-circuit.
